# EUROPÄISCHE PATENTANMELDUNG

(11) **EP 1 351 330 A2**
(43) Veröffentlichungstag der Anmeldung: **08.10.2003**
(21) Anmeldenummer: 03004709.6
(22) Anmeldetag: 04.03.2003
(51) Int. Cl.: H01M 8/04

(54) **Brennstoffzelle und Verfahren zum Kaltstarten einer solchen Brennstoffzelle**

(30) Priorität: 23.03.2002 DE 10213134
(71) Anmelder: DaimlerChrysler AG, 70567 Stuttgart (DE)
(72) Erfinder: Docter, Andreas, Dr.-Ing., 73728 Esslingen (DE); Frank, Georg, Dr.rer.nat., 72074 Tübingen (DE); Konrad, Gerhard, Dr., 89081 Ulm (DE); Lamm, Arnold, Dr., 89275 Elchingen (DE); Müller, Jens Thomas, Dr., 81827 München (DE)

(57) **Zusammenfassung**

Es wird eine Möglichkeit zur Verbesserung der Kaltstartperformance von Brennstoffzellen vorgeschlagen, bei der kein zusätzlicher Kraftstoff verbraucht wird und die daher insgesamt energieneutral ist.

Die Brennstoffzellen umfassen jeweils eine Elektrolyt-Elektroden-Einheit, auf der einerseits die Kathode und andererseits die Anode der Brennstoffzelle angeordnet ist, und

Strömungsmodule für die Prozessgase und das Kühlmittel der Brennstoffzelle, die mit über den beiden Elektroden angeordnet sind.

Erfindungsgemäß sind bzw. ist das über der Anode und/oder das über der Kathode angeordnete Strömungsmodul zumindest teilweise aus einem Material gebildet, das ein Hydrid bilden kann, wobei Wärme abgegeben wird.

## Beschreibung

Die Erfindung betrifft eine Brennstoffzelle mit einer Elektrolyt-Elektroden-Einheit, auf der einerseits die Kathode und andererseits die Anode der Brennstoffzelle angeordnet ist, und mit über diesen beiden Elektroden angeordneten Strömungsmodulen für die Prozessgase und das Kühlmittel der Brennstoffzelle.

Des Weiteren betrifft die Erfindung ein Verfahren zum Kaltstarten einer solchen Brennstoffzelle.

Bei den aus der Praxis bekannten PEM-Brennstoffzellen dient eine Ionenaustauschermembran als Elektrolyt. Die lonenaustauschermembran umfasst eine sulfonierte chemische Verbindung, die Wasser in der Membran bindet, um eine ausreichende Protonenleitfähigkeit zu gewährleisten. Bedingt durch das Einfrieren des in der Membran gespeicherten Wassers steigt der Membranwiderstand bei einer Temperatur unter 0°C sprunghaft um zwei bis drei Zehnerpotenzen an. Auch bei Nieder- und Mitteltemperatur-Brennstoffzellen, wie z.B. der PAFC (Phosphoric Acid Fuel Cell), steigt der Widerstand des Elektrolyten bei niedrigen Temperaturen um ein Vielfaches an. Neben den elektrochemischen Eigenschaften des Elektrolyten sind in der Regel auch die Aktivitäten der Kathoden- und Anoden-Katalysatoren einer Brennstoffzelle temperaturabhängig. Bei PEM-Brennstoffzellen, die mit Reformat betrieben werden, kommt noch hinzu, dass Reformat in der Kaltstartphase sehr hohe Kohlenmonoxid(CO)-Konzentrationen aufweist und die CO-Toleranz der noch kalten Brennstoffzelle äußerst gering ist.

Insgesamt können die aus der Praxis bekannten Brennstoffzellen daher erst ab einer bestimmten Starttemperatur, die zur Zeit bei ca. 5°C liegt, Strom produzieren. Bei einem Kaltstart muss eine Brennstoffzelle also zunächst auf Temperaturen oberhalb der Starttemperatur erwärmt werden. Aufgrund der großen thermischen Masse der Brennstoffzellen ist dazu eine beträchtliche Heizleistung erforderlich, insbesondere wenn der Kaltstart in ähnlich kurzen Zeiten erfolgen soll, wie bei herkömmlichen Verbrennungsmotoren. Eine Erwärmung der Elektrolyt-Elektroden-Einheit unabhängig von den Strömungsmodulen ist dabei nicht möglich, da die Wärmeleitung zwischen der Elektrolyt-Elektroden-Einheit und den Strömungsmodulen konstruktionsbedingt sehr gut sein muss, um die während des Brennstoffzellenbetriebs an der Elektrolyt-Elektroden-Einheit entstehende Abwärme an die Umgebung abzuführen.

Das nachfolgende Beispiel soll die Größenordnung der zuzuführenden Heizleistung verdeutlichen.

Ein BZ-Stack, d.h. eine Brennstoffzelleneinheit, bestehend aus mehreren miteinander verschalteten Brennstoffzellen, wie sie beispielsweise für einen Pkw-Antrieb eingesetzt wird, soll eine maximale Leistung von 60 kWel erzeugen. Die Masse des BZ-Stacks beträgt 50 kg, als Material wird Stahl mit einer Wärmekapazität von cp = 0,45 kJ/kg•K angenommen. Soll dieser BZ-Stack von einer Temperatur von -15°C auf +5°C erwärmt werden, muss eine Wärmemenge von 450 kJ zugeführt werden. Dazu ist eine Heizleistung von mindestens 45 kW erforderlich, wenn die Erwärmung in weniger als 10 sec erfolgen soll. Befindet sich in dem BZ-Stack noch eine Menge von 5 kg Kühlmittel, wie z.B. ein Wasser/Glykolgemisch mit einer Wärmekapazität von 3 kJ/kg•K, erhöht sich die erforderliche Wärmemenge auf 750 kJ und die benötigte Heizleistung auf 75 kW. Entsprechend erhöht sich die notwendige Heizleistung bei tieferen Temperaturen und, wenn kürzere Startzeiten erzielt werden sollen.

In der Praxis werden Brennstoffzellen beim Kaltstart häufig indirekt durch den Kühlmittelstrom erwärmt, der mit Hilfe einer elektrischen Heizung und/oder eines Kraftstoffbrenners erwärmt wird. Diese Methode erweist sich insbesondere unter energetischen Gesichtspunkten als problematisch, da das Kühlmittel schon allein mengenbedingt eine hohe Wärmekapazität aufweist und außerdem aufgrund der erforderlichen Wärmeübergänge Verluste auftreten.

In der internationalen Patentanmeldung WO 00/54356 wird ein Verfahren zum Kaltstarten einer Brennstoffzelle beschrieben, bei dem die Reaktionswärme der Verbrennung der Prozessgase zum Aufheizen der Brennstoffzelle genutzt wird. Die für dieses Verfahren ausgelegte Brennstoffzelle umfasst jeweils eine Reaktionskammer auf jeder Seite der zentral angeordneten Elektrolyt-Elektroden-Einheit und Leitungen für die Prozessgase der Brennstoffzelle, die so geführt sind, dass beim Starten der Brennstoffzelle jeweils beide Prozessgase in die Reaktionskammern eingeleitet werden können. Die Wandungen der Reaktionskammern sind mit Katalysator belegt, so dass die Prozessgase in den Reaktionskammern wie in einem Katalytbrenner katalytisch umgesetzt werden.

Bei der in der WO 00/54356 beschriebenen Methode wird die Wärme in der Brennstoffzelle selbst erzeugt, also dort, wo sie benötigt wird, so dass Verluste durch Wärmeübergänge vermieden werden. Da hier die Brennstoffzelle auch ohne Kühlmittel erwärmt werden kann, ist die zu erwärmende Masse und damit auch die Wärmekapazität relativ gering. Dadurch lassen sich schnellere Aufheizzeiten realisieren. Allerdings wird für den Kaltstart auch bei der in der WO 00/54356 beschriebenen Methode zusätzlich Kraftstoff benötigt.

Mit der vorliegenden Erfindung wird eine Möglichkeit zur Verbesserung der Kaltstartperformance von Brennstoffzellen der eingangs genannten Art vorgeschlagen, bei der kein zusätzlicher Kraftstoff verbraucht wird und die daher insgesamt energieneutral ist.

Erfindungsgemäß ist bzw. sind dazu das über der Anode und/oder das über der Kathode angeordnete Strömungsmodul zumindest teilweise aus einem Material gebildet, das ein Hydrid bilden kann, wobei Wärme abgegeben wird. Zum Kaltstarten einer dermaßen erfindungsgemäß ausgebildeten Brennstoffzelle wird bzw. werden das über der Anode und/oder das über der Kathode angeordnete Strömungsmodul mit einem wasserstoffhaltigen Gas geflutet, so dass eine Hydridbildung eintritt. Durch die dabei abgegebene Wärme wird die Brennstoffzelle aufgeheizt.

Diese Maßnahme erweist sich insbesondere dann als vorteilhaft und einfach, wenn über der Anode ein entsprechendes Strömungsmodul angeordnet ist, da der Anode zum Betreiben der Brennstoffzelle ohnehin Wasserstoff zugeführt werden muss. In diesem Fall wird beim Kaltstart also kein zusätzlicher Kraftstoff verbraucht. Die erfindungsgemäße Methode ist insofern energieneutral, da zur Regenerierung des zur Hydridbildung fähigen Materials des Strömungsmoduls die ansonsten ungenutzte Brennstoffzellenabwärme genutzt wird. Von besonderem Vorteil ist außerdem, dass bei der erfindungsgemäßen Methode unmittelbar dort Wärme erzeugt wird, wo sie benötigt wird, nämlich in der Brennstoffzelle. Auf diese Weise wird kein ebenfalls zu erwärmendes Medium für den Wärmetransport benötigt, und Wärmeübergänge werden weitestgehend vermieden.

Sowohl unter herstellungstechnischen Gesichtspunkten als auch im Hinblick auf die Herstellungskosten erweist es sich als vorteilhaft, wenn die Prozessgaskanäle des anodenseitigen und/oder kathodenseitigen Strömungsmoduls zumindest teilweise mit dem zur Hydridbildung fähigen Material beschichtet sind. Dafür eignen sich besonders Metalle oder Metalllegierungen, die Tieftemperaturhydride bilden können, wie z.B. Titan-Eisenlegierungen (TiFe). Tieftemperaturhydride können Wasserstoff in einem Temperaturbereich von -30°C und +50°C speichern. Dabei können pro kg gebildetem Metallhydrid 360 kJ Wärmeenergie abgegeben werden. Zur Erzeugung von 750 kJ Wärmeenergie, wie im voranstehend beschriebenen Beispiel benötigt, müssen also ca. 2,5 kg Metallhydrid gebildet werden. Ein weiterer Vorteil beim Einsatz von Tieftemperaturhydriden besteht darin, dass der gespeicherte Wasserstoff bei den normalen Betriebsbedingungen der Brennstoffzelle, Betriebstemperatur T > 70°C und Drücken kleiner 10bar, wieder freigesetzt wird.

Grundsätzlich lassen sich die voranstehend erörterten erfindungsgemäßen Maßnahmen zum Aufheizen einer Brennstoffzelle beim Kaltstart gut mit weiteren Heizmaßnahmen kombinieren, auch wenn diese auf einem anderen Heizprinzip beruhen. Nachfolgend werden einige vorteilhafte Kombinationen als Weiterbildungen der Erfindung näher erläutert.

Die erfindungsgemäße interne Beheizung durch exotherme Hydridbildung eines geeigneten Materials im Bereich mindestens eines Strömungsmoduls der Brennstoffzelle lässt sich gut mit einer weiteren internen Beheizungsmethode kombinieren, bei der Wasserstoff katalytisch oxidiert wird. Durch die dabei frei werdende Energie wird die Brennstoffzelle zusätzlich erwärmt. Bei dieser Variante ist in mindestens einem der Strömungsmodule der Brennstoffzelle zumindest ein Reaktionsraum ausgebildet, in den in der Kaltstartphase sowohl ein wasserstoffhaltiges Fluid als auch ein sauerstoffhaltiges Fluid eingeleitet werden kann. Außerdem befindet sich in diesem Reaktionsraum ein Oxidationskatalysator für die exotherme Umsetzung des Wasserstoffs, so dass der Reaktionsraum wie ein katalytischer Brenner wirkt. Wenn der Reaktionsraum an eine der Elektroden der Brennstoffzelle angrenzt, kann die Oxidationsreaktion in vorteilhafter Weise durch einen auf diese Elektrode aufgebrachten Oxidationskatalysator katalysiert werden. Zusätzlich oder alternativ kann auch ein spezieller Oxidationskatalysator, der vorzugsweise tieftemperaturaktiv sein sollte, auf die Wandung des Reaktionsraums, also die Oberfläche des Strömungsmoduls aufgebracht sein. So kann die Oxidationsreaktion beispielsweise durch eine ultradünne Platinschicht katalysiert werden, die durch PVC, CVD oder auch galvanisch auf der Oberfläche des Strömungsmoduls erzeugt worden ist. Eine solche Platinschicht kann gleichzeitig als Korrosionsschutz für das Strömungsmodul dienen oder ggf. auch eine ausreichende elektrische Leitfähigkeit sicherstellen.

Die erfindungsgemäße interne Beheizung der Brennstoffzelle durch exotherme Hydridbildung eines geeigneten Materials im Bereich der Strömungsmodule kann auch durch eine elektrische Beheizung der Strömungsmodule unterstützt werden, die den Hauptanteil der thermischen Masse einer Brennstoffzelle bilden. In diesem Zusammenhang erweist es sich als vorteilhaft, wenn in mindestens einem der Strömungsmodule mindestens ein Heizelement mechanisch integriert ist.

Beim Kaltstart erweist es sich außerdem als vorteilhaft, wenn die Menge des durch die Brennstoffzelle geleiteten Kühlmittels und damit die insgesamt zu beheizende thermische Masse der Brennstoffzelle reduziert wird und die Brennstoffzelle so lange mit der minimal erforderlichen Menge an Kühlmittel betrieben wird, bis die Starttemperatur erreicht ist. Durch Erwärmen des durch die Brennstoffzelle geleiteten Kühlmittels kann die Brennstoffzelle zusätzlich zu der erfindungsgemäßen internen Beheizung indirekt beheizt werden. Das Kühlmittel kann einfach aus dem Kühlkreislauf der Brennstoffzelle abgepumpt werden, wodurch die thermische Masse der Brennstoffzelle um fast 50% reduziert werden kann. In diesem Fall muss ein Ausgleichsbehälter vorgesehen sein, in dem das abgepumpte Kühlmittel gesammelt wird, um es nach Erreichen der BZ-Starttemperatur wieder in den Kühlkreislauf einzuspeisen. Das mit der Brennstoffzelle aufzuheizende Kühlmittel kann aber auch durch Kurzschließen des Kühlkreislaufs reduziert werden. In jedem Fall ist es vorteilhaft, die Kühlmittelmenge in Abhängigkeit von der Umgebungstemperatur zu reduzieren. Das Kühlmittel kann beispielsweise elektrisch mit Hilfe einer zusätzlichen Batterie oder durch chemische Energie mit Hilfe eines Kraftstoffbrenners beheizt werden. Zum externen Beheizen des durch die Brennstoffzelle geleiteten Kühlmittels kann auch ein Wärmetauscher vorgesehen sein, der zumindest teilweise aus einem Material gebildet ist, vorzugsweise mit einem solchen Material beschichtet ist, das ein Hydrid bilden kann, wobei Wärme abgegeben wird. Beim Kaltstart wird der Wärmetauscher mit einem wasserstoffhaltigen Gas geflutet. Durch die Hydridbildung bzw. die dabei frei werdende Wärme, wird das im Wärmetauscher befindliche Kühlmittel beheizt.

In der Praxis werden meist sogenannte Brennstoffzellen(BZ)-Stacks eingesetzt, d.h. Brennstoffzelleneinheiten, die aus mehreren miteinander verschalteten Brennstoffzellen bestehen. BZ-Stacks arbeiten in der Regel mit energetischen Wirkungsgraden von 40-70%. Die Verlustenergie fällt in Form von Wärmeenergie an, die über das Kühlmittel abgeführt wird. Eine geeignete Regelung des Kühlmittelstroms vorausgesetzt, erwärmt sich ein BZ-Stack durch diese Verlustenergie selbständig von seiner Starttemperatur auf seine normale Betriebstemperatur.

In der Praxis ist es durchaus akzeptabel, wenn nicht unmittelbar nach dem Kaltstart einer Brennstoffzelleneinheit deren maximale Leistung zur Verfügung steht. Im Rahmen der vorliegenden Erfindung wird deshalb eine Brennstoffzelleneinheit mit einem segmentierten Aufbau vorgeschlagen, der eine Starteinheit mit mindestens einer Brennstoffzelle umfasst, wie sie voranstehend als erfindungsgemäß beschrieben worden ist, und mindestens eine weitere Einheit mit weiteren Brennstoffzellen. Erfindungsgemäß sollen beim Kaltstart zunächst die Brennstoffzellen der Starteinheit aktiviert werden. Da die Starteinheit im Vergleich zur gesamten Brennstoffzelleneinheit eine kleinere thermische Masse darstellt, kann die Starteinheit relativ schnell auf die erforderliche Starttemperatur gebracht werden. Die Verlustenergie der Starteinheit erwärmt das Kühlmittel, das zumindest nach Erreichen der Starttemperatur auch durch die weiteren Einheiten der Brennstoffzelleneinheit geleitet wird und diese erwärmt, so dass auch diese auf Starttemperatur gebracht werden.

Wie bereits voranstehend ausführlich erläutert, gibt es unterschiedliche Möglichkeiten, die Lehre der vorliegenden Erfindung in vorteilhafter Weise auszugestalten und weiterzubilden. Dazu wird einerseits auf die Patentansprüche und andererseits auf die nachfolgende Beschreibung mehrerer Ausführungsbeispiele der Erfindung anhand der Zeichnungen verwiesen.

Fig. 1 zeigt die schematische Darstellung eines BZ-Kühlkreislaufs mit Kurzschlussmöglichkeit.

Die Figuren 2a und 2b zeigen schematisch jeweils die Aufsicht auf ein mit elektrischen Heizelementen ausgestattetes Strömungsmodul.

Die Figuren 3a und 3b zeigen schematisch zwei Verschaltungsmöglichkeiten für die Starteinheit einer Brennstoffzelleneinheit.

Wie bereits erwähnt, müssen Brennstoffzellen im Falle eines Kaltstarts zunächst auf ihre Starttemperatur erwärmt werden, bevor sie selbst Leistung erzeugen können. Je geringer die zu erwärmende thermische Masse der Brennstoffzelle und des Kühlmittels in der Brennstoffzelle ist, um so geringer ist die für das Erreichen der BZ-Starttemperatur erforderliche Heizleistung und um so schneller wird die BZ-Starttemperatur erreicht.

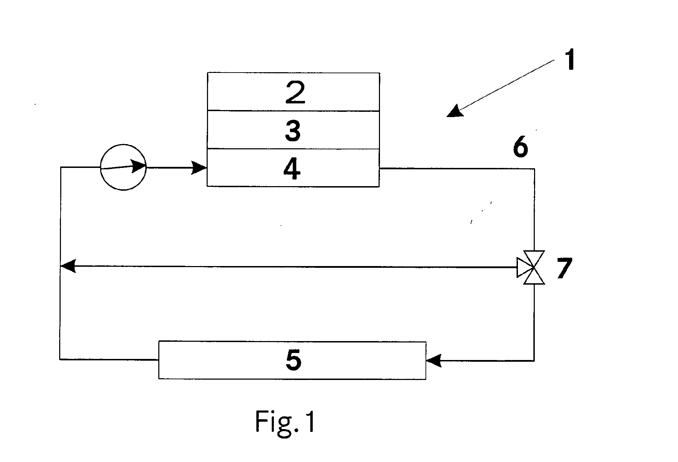

Neben der erfindungsgemäßen Methode der internen Beheizung einer Brennstoffzelle durch exotherme Hydridbildung eines im Bereich der Strömungsmodule angeordneten hierfür geeigneten Materials erweist es sich als vorteilhaft, die zu erwärmende thermische Masse während der Kaltstartphase durch Kurzschluss des Kühlkreislaufs der Brennstoffzelle zu reduzieren. Wie Fig. 1 verdeutlicht, muss in diesem Fall nur ein Bruchteil der Kühlmittelmenge zusammen mit der Brennstoffzelle 1 erwärmt werden. Die einzelnen Komponenten Anode 2, Kathode 3 und Kühlung 4 der Brennstoffzelle 1 sind hier lediglich schematisch dargestellt. Der mit einem Fahrzeugkühler 5 verbundene Kühlkreislauf 6 wird hier über ein einfaches Thermostatventil 7 kurzgeschlossen.

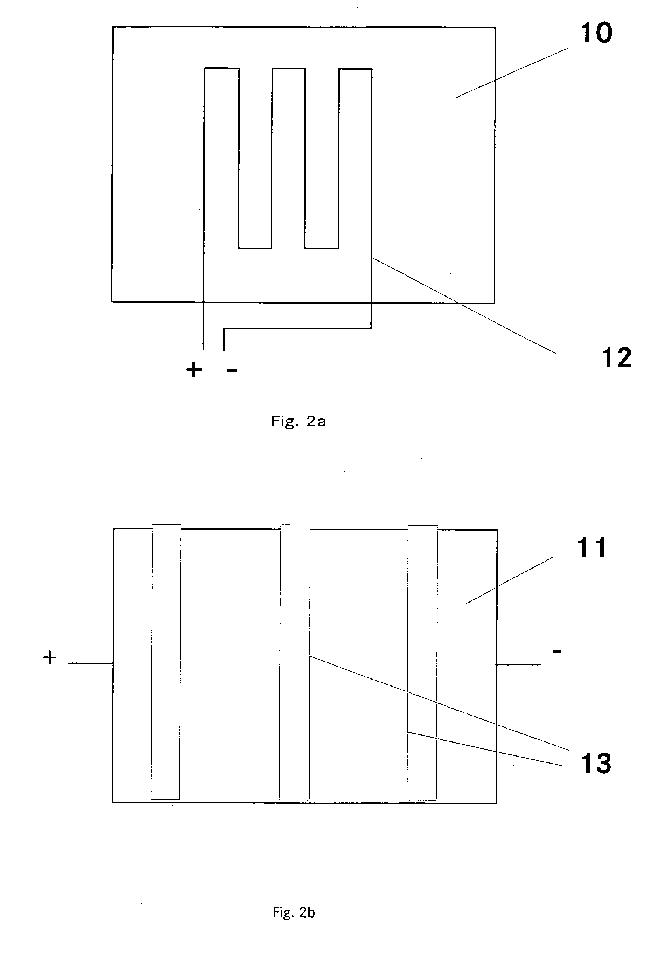

Der Aufbau einer Brennstoffzelle und dementsprechend auch der Aufbau eines BZ-Stacks umfasst im Wesentlichen eine bzw. mehrere MEAs (Membrane Electrode Assemblys) und Strömungsmodule, die meist in Form von Bipolarplatten realisiert sind und einen großen Teil der thermischen Masse des Aufbaus bilden. In den Figuren 2a und 2b ist jeweils eine Bipolarplatte 10 und 11 dargestellt, in die elektrische Heizelemente 12 und 13 zum Aufheizen der Bipolarplatte 10 bzw. 11 und dadurch des gesamten Aufbaus der Brennstoffzelle bzw. des BZ-Stacks integriert sind. Im Fall der Fig. 2a ist ein elektrischer Heizleiter 12 mit elektrischer Außenisolation mechanisch in die Bipolarplatte 10 integriert, die beispielsweise aus Metall oder Graphit bestehen kann. Im Fall der Fig. 2b sind in die Bipolarplatte 11 Bereiche 13 mit erhöhtem Ohmschen Widerstand integriert, die als Heizleiter dienen.

Wie bereits erwähnt, reicht es häufig aus, wenn ein BZ-Stack in der Startphase zunächst eine reduzierte Leistung liefert. Erfindungsgemäß wird daher vorgeschlagen, den BZ-Stack, je nach tolerierbarer Minimalleistung, in eine Starteinheit und weitere Einheiten zu segmentieren. Wird der BZ-Stack beispielsweise im Verhältnis 1/3 segmentiert, so beträgt die elektrische Leistung der Starteinheit nur ein Viertel der maximalen Leistung des BZ-Stacks. Allerdings beträgt auch die Masse der Starteinheit nur ein Viertel der BZ-Stack-Gesamtmasse, so dass die Starteinheit bei gegebener Heizleistung viermal schneller erwärmt werden kann als der gesamte BZ-Stack oder bei gleicher Startzeit nur ein Viertel der Heizleistung erforderlich ist.

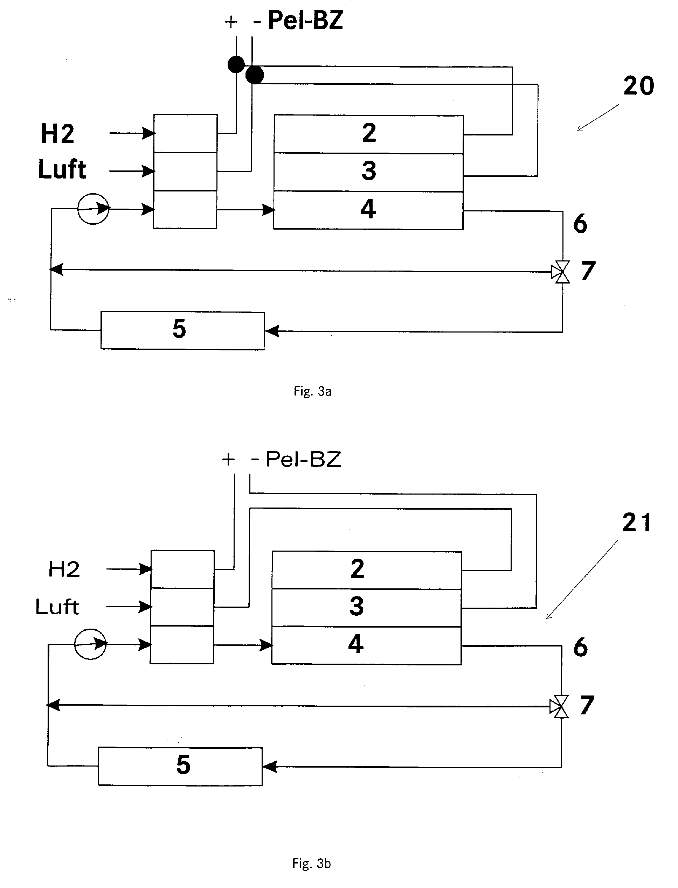

Für die elektrische Konfiguration eines derartigen BZ-Stacks mit Starteinheit und weiteren Einheiten bieten sich die in den Figuren 3a und 3b dargestellten Varianten an. Bei einer seriellen Verschaltung von Starteinheit 20 und einer weiteren Einheit, wie in Fig. 3a dargestellt, muss der in der Starteinheit erzeugte Gleichstrom in einem Wechselstromrichter umgewandelt und dann auf das gewünschte Spannungsniveau hochtransformiert werden. Bei einer parallelen Verschaltung von Starteinheit 21 und einer weiteren Einheit, wie in Fig. 3b dargestellt, sind diese so ausgelegt, dass jede Einheit die gewünschte Spannung bereitstellt.

Die voranstehend im Rahmen der Beschreibungseinleitung und der Figurenbeschreibung erläuterten Maßnahmen ermöglichen - allein oder auch in beliebiger Kombination -, die Startzeit eines BZ-Stacks bei gegebener Heizleistung deutlich zu reduzieren bzw. eine gewünschte Startzeit mit relativ geringer Heizleistung zu erreichen. Mit Hilfe der erfindungsgemäßen Brennstoffzelle kann dadurch insbesondere beim Kaltstart Kraftstoff eingespart werden, was besonders bei Fahrzeuganwendungen von großer Bedeutung ist.

### Bezugszeichen

- 1: Brennstoffzelle (Fig. 1)
- 2: Anode
- 3: Kathode
- 4: Kühlung
- 5: Fahrzeugkühler
- 6: Kühlkreislauf
- 7: Thermostatventil

- 10: Bipolarplatte (Fig. 2a)
- 11: Bipolarplatte (Fig. 2b)
- 12: Heizelement / Heizleiter
- 13: Heizelement / Bereich mit erhöhtem Ohmschen Widerstand

- 20: Starteinheit (Fig. 3a)
- 21: Starteinheit (Fig. 3b)

## Patentansprüche

1. Brennstoffzelle
- mit einer Elektrolyt-Elektroden-Einheit, auf der einerseits die Kathode und andererseits die Anode der Brennstoffzelle angeordnet ist, und
- mit über diesen beiden Elektroden angeordneten Strömungsmodulen für die Prozessgase und das Kühlmittel der Brennstoffzelle,
**dadurch gekennzeichnet, dass** das über der Anode und/oder das über der Kathode angeordnete Strömungsmodul zumindest teilweise aus einem Material gebildet sind/ist, das ein Hydrid bilden kann, wobei Wärme abgegeben wird.

2. Brennstoffzelle nach Anspruch 1, **dadurch gekennzeichnet, dass** die Prozessgaskanäle des anodenseitigen und/oder kathodenseitigen Strömungsmoduls zumindest teilweise mit dem zur Hydridbildung fähigen Material beschichtet sind.

3. Brennstoffzelle nach einem der Ansprüche 1 oder 2, **dadurch gekennzeichnet, dass** mindestens ein Metall oder eine Metalllegierung, das bzw. die Tieftemperaturhydride bilden kann, als zur Hydridbildung fähiges Material dient.

4. Brennstoffzelle nach einem der Ansprüche 1 bis 3, **dadurch gekennzeichnet, dass** eine Titan-Eisenlegierung (TiFe) als zur Hydridbildung fähiges Material dient

5. Brennstoffzelle nach einem der Ansprüche 1 bis 4, **dadurch gekennzeichnet, dass** in mindestens einem der Strömungsmodule mindestens ein Reaktionsraum ausgebildet ist, dem sowohl ein wasserstoffhaltiges Fluid als auch ein sauerstoffhaltiges Fluid zuführbar ist, und dass in diesem Reaktionsraum mindestens ein Katalysator zum Oxidieren von Wasserstoff angeordnet ist.

6. Brennstoffzelle nach Anspruch 5, **dadurch gekennzeichnet, dass** die Oxidationsreaktion durch mindestens einen auf die Elektroden aufgebrachten Oxidationskatalysator katalysiert wird.

7. Brennstoffzelle nach einem der Ansprüche 5 oder 6, **dadurch gekennzeichnet dass** die Oxidationsreaktion durch mindestens eines auf die Oberfläche des Strömungsmoduls aufgebrachten Oxidationskatalysator katalysiert wird.

8. Brennstoffzelle nach einem der Ansprüche 6 oder 7, **dadurch gekennzeichnet, dass** der Oxidationskatalysator tieftemperaturaktiv ist.

9. Brennstoffzelle nach einem der Ansprüche 6 bis 8, **dadurch gekennzeichnet, dass** eine ultradünne Platinschicht als Oxidationskatalysator dient.

10. Brennstoffzelle nach einem der Ansprüche 1 bis 9, **dadurch gekennzeichnet, dass** in mindestens einem der Strömungsmodule mindestens ein Heizelement zur elektrischen Beheizung des Strömungsmoduls integriert ist.

11. Brennstoffzelle nach einem der Ansprüche 1 bis 10, **dadurch gekennzeichnet, dass** Mittel zum Reduzieren der durch die Brennstoffzelle geleiteten Kühlmittelmenge vorgesehen sind und dass Mittel zum externen Beheizen des durch die Brennstoffzelle geleiteten Kühlmittels vorgesehen sind.

12. Brennstoffzelle nach Anspruch 11, **dadurch gekennzeichnet, dass** Mittel zum Abpumpen von Kühlmittel aus dem Kühlkreislauf der Brennstoffzelle und ein Ausgleichsbehälter zum Sammeln des abgepumpten Kühlmittels vorgesehen sind.

13. Brennstoffzelle nach einem der Ansprüche 11 oder 12, **dadurch gekennzeichnet, dass** Mittel zum Kurzschließen des Kühlkreislaufs vorgesehen sind.

14. Brennstoffzelle nach einem der Ansprüche 11 bis 13, **dadurch gekennzeichnet, dass** eine elektrische Heizeinrichtung oder ein Kraftstoffbrenner zum externen Beheizen des durch die Brennstoffzelle geleiteten Kühlmittels vorgesehen ist.

15. Brennstoffzelle nach einem der Ansprüche 11 bis 14, **dadurch gekennzeichnet, dass** ein Wärmetauscher zum externen Beheizen des durch die Brennstoffzelle geleiteten Kühlmittels vorgesehen ist, dass der Wärmetauscher zumindest teilweise aus einem Material gebildet ist, vorzugsweise mit einem solchen Material beschichtet ist, das ein Hydrid bilden kann, wobei Wärme abgegeben wird, und dass Mittel zum Einleiten von Wasserstoff in den Wärmetauscher vorgesehen sind, so dass eine Hydridbildung eintritt und das im Wärmetauscher befindliche Kühlmittel durch die dabei abgegebene Wärme beheizt wird.

16. Brennstoffzelleneinheit, bestehend aus mehreren miteinander verschalteten Brennstoffzellen, **gekennzeichnet durch** einen segmentierten Aufbau mit einer Starteinheit, die mindestens eine Brennstoffzelle nach einem der Ansprüche 1 bis 15 umfasst, und mit mindestens einer weiteren Einheit, die ebenfalls mindestens eine Brennstoffzelle umfasst, wobei im Falle eines Kaltstarts zunächst die Brennstoffzellen der Starteinheit aktiviert und auf die erforderliche Starttemperatur gebracht werden und dann die Brennstoffzellen der weiteren Einheit **durch** das in der Starteinheit erwärmte Kühlmittel auf Starttemperatur gebracht werden.

17. Brennstoffzelleneinheit nach Anspruch 16, **dadurch gekennzeichnet, dass** die Starteinheit und die weitere Einheit seriell verschaltet sind.

18. Brennstoffzelleneinheit nach Anspruch 17, **dadurch gekennzeichnet, dass** die Starteinheit und die weitere Einheit parallel verschaltet sind.

19. Verfahren zum Kaltstarten einer Brennstoffzelle nach einem der Ansprüche 1 bis 15, **dadurch gekennzeichnet, dass** das über der Anode und/oder das über der Kathode angeordnete Strömungsmodul mit einem wasserstoffhaltigen Gas geflutet wird, so dass eine Hydridbildung eintritt und die Brennstoffzelle durch die dabei abgegebene Wärme aufgeheizt wird.

20. Verfahren nach Anspruch 19, wobei in mindestens einem der Strömungsmodule ein Reaktionsraum ausgebildet ist, **dadurch gekennzeichnet, dass** ein wasserstoffhaltiges Gas und ein sauerstoffhaltiges Gas in den Reaktionsraum eingeleitet werden, wo der Wasserstoff katalytisch oxidiert wird.

21. Verfahren nach einem der Ansprüche 19 oder 20, **dadurch gekennzeichnet, dass** mindestens eines der Strömungsmodule elektrisch beheizt wird.

22. Verfahren nach einem der Ansprüche 19 bis 21, **dadurch gekennzeichnet, dass** die durch die Brennstoffzelle geleitete Kühlmittelmenge reduziert wird und dass das durch die Brennstoffzelle geleitete Kühlmittel extern beheizt wird.

23. Verfahren nach Anspruch 22, **dadurch gekennzeichnet, dass** die durch die Brennstoffzelle geleitete Kuhlmittelmenge in Abhängigkeit von der Umgebungstemperatur reduziert wird.

24. Verfahren nach einem der Ansprüche 22 oder 23, **dadurch gekennzeichnet, dass** Kühlmittel aus dem Kühlkreislauf der Brennstoffzelle abgepumpt wird und in einem Ausgleichsbehälter gesammelt wird.

25. Verfahren nach einem der Ansprüche 23 oder 24, **dadurch gekennzeichnet, dass** der Kühlkreislauf kurzgeschlossen wird.

26. Verfahren nach einem der Ansprüche 23 bis 25, **dadurch gekennzeichnet, dass** das durch die Brennstoffzelle geleitete Kühlmittel elektrisch oder mit Hilfe eines Kraftstoffbrenners beheizt wird.

27. Verfahren nach einem der Ansprüche 23 bis 26, wobei zum externen Beheizen des durch die Brennstoffzelle geleiteten Kühlmittels ein Wärmetauscher vorgesehen ist, der zumindest teilweise aus einem Material gebildet ist, vorzugsweise mit einem solchen Material beschichtet ist, das ein Hydrid bilden kann, wobei Wärme abgegeben wird, **dadurch gekennzeichnet, dass** der Wärmetauscher mit einem wasserstoffhaltigen Gas geflutet wird, so dass eine Hydridbildung eintritt und das im Wärmetauscher befindliche Kühlmittel durch die dabei abgegebene Wärme aufgeheizt wird.

28. Verfahren zum Kaltstarten einer aus mehreren miteinander verschalteten Brennstoffzellen bestehenden Brennstoffzelleneinheit nach einem der Ansprüche 16 bis 18,
**dadurch gekennzeichnet, dass** zunächst die Brennstoffzellen der Starteinheit aktiviert und auf die erforderliche Starttemperatur gebracht werden und dann die Brennstoffzellen der weiteren Einheit durch das in der Starteinheit erwärmte Kühlmittel auf Starttemperatur gebracht werden.
